# EUROPEAN PATENT APPLICATION

(11) **EP 4 362 508 A1**
(43) Date of publication of application: **01.05.2024**
(21) Application number: 22204149.3
(22) Date of filing: 27.10.2022
(51) Int. Cl.: H04W 4/08, H04W 4/02, H04W 4/40, G08G 1/00

(54) **METHOD, COMPUTER PROGRAM AND DATA PROCESSING APPARATUS FOR EXCHANGING COOPERATIVE AWARENESS INFORMATION OF A GROUP OF INTELLIGENT TRANSPORT SYSTEM STATIONS**

(71) Applicant: DENSO CORPORATION, Kariya-city, Aichi-pref., 448-8661 (JP)
(72) Inventor: LEINMÜLLER, Tim, 85386 Eching (DE); MITTAL, Prachi, 85386 Eching (DE)
(74) Representative: Winter, Brandl - Partnerschaft mbB

(57) **Abstract**

A method, a computer program and a data processing apparatus for exchanging cooperative awareness information of a group of intelligent transport system stations (ITS-Ss) with the outside of the group are provided, wherein the following approach is taken: upon the formation of a group or upon any change in the composition of a group of ITS-Ss, an ITS-S is determined as a group communicator and static information about the other ITS-Ss as group members are noted down by the group communicator. Then, group Cooperative Awareness Messages (gCAM), which includes information on the group and each group member, are shared by the group communicator with the outside of the group

## Description

### Technical field

The present invention relates to a method, to a computer program and to a data processing apparatus for exchanging cooperative awareness information of a group of intelligent transport system stations (ITS-Ss) with the outside of the group.

### Prior art

A known cooperative intelligent transport system (C-ITS) comprises stations (e.g., vehicles and/or roadside units) that exchange information with each other using (direct) wireless communication, known as vehicle-to-x, or vehicle-to-everything, (V2X) (direct).

V2X is a generic term for road traffic networking, electronic communication of road users with each other in the forms of vehicle-to-vehicle (V2V), vehicle-to-infrastructure (V2I), vehicle-to-network (V2N) and vehicle-to-pedestrian (V2P). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X, for example, safety and road traffic messages, emergency and service data, toll billing and navigation as well as Internet and database content are exchanged. The aims of V2V include notifying drivers of critical and dangerous situations at an early stage, improving the vehicles' awareness of their surroundings, supporting the vehicles' driver assistance systems, and supporting cooperative automated mobility, thereby improving road traffic safety and optimizing road traffic flow.

The ITS stations (ITS-Ss) in the C-ITS share CAMs (Cooperative Awareness Messages (CAMs) to inform each other about their own position, kinematics, and other data, as for instance defined in ETSI EN 302 637-2. The ITS stations use DENMs (Decentralized Environmental Notification Messages) to inform each other on dedicated events, such as hard braking or obstacles on the road.

Another V2X message is the Collective Perception Message (CPM) that contains information about on-board sensors, such as field-of-views (FOVs), free-space, and the objects detected within the road traffic environment by the on-board sensors of an ITS-S. CPMs are sent out periodically and contain information on one or more detected objects, field-of-views and other characteristics of vehicle on-board sensors such as e.g., a radar, a camera and the like. CPMs are composed by the Collective Perception Service (CPS) within the facility layer of the ETSI ITS stack and are composed and transmitted as per CPM generation rules of CPS. In C-ITS, a concept of Decentralized Congestion Control (DCC) is employed to handle a congested channel. DCC operates at all layers of the ETSI ITS stack.

ITS messages are assigned specific priorities, e.g. in the form of traffic classes, which determine the precedence of a particular message over others when being transmitted on the channel, their repetition rate is compared to other messages, specifically when the channel is congested. This is specified as part of the decentralized congestion control (DCC) framework in ETSI TS 103 175.

CAMs are created and sent out periodically with a repetition rate of between 1 and 10 Hz. In high traffic density area, the frequent transmission of CAMs from multiple vehicles can quickly exhaust the available channel resources for ITS communication.

### Summary of the invention

### Technical Problem

The object of the present invention is to provide a method, a computer program and a data processing apparatus for exchanging cooperative awareness information with which it is possible avoid to high load and rapid congestion of the wireless channels in a busy-traffic area. Moreover, the calculation intensity in ITS-Ss in other vehicle for path prediction and path planning of the own path of the other vehicle is to be reduced.

### Solution to the Problem

This object is solved by the subject matter of claims 1, 11 and 12. Further aspects are defined in the subclaims.

According to a first aspect of the present invention, a method for exchanging cooperative awareness information of a group of intelligent transport system stations (ITS-Ss) with the outside of the group is provided wherein the method comprises the steps of upon the formation of a group or upon any change in the composition of a group of ITS-Ss, determining an ITS-S as a group communicator and noting down static information about the other ITS-Ss as group members by the group communicator, sharing group Cooperative Awareness Messages (gCAM) which includes information on the group and each group member, by the group communicator with the outside of the group. Due to the gCAM concept of the present invention, a smaller number of CAMs can be used on the main ITS channel. For instance, the gCAMs can be sent out on the main ITS channel, e.g. channel 180 in the case of ITS-G5, while other messages, like beacons and/or group-specific messages, can be on the same channel or can be on a different channel used for the group communication.

According to a second aspect of the present invention, in the method according to the first aspect of the present invention, in the step of sharing gCAM, gCAMs are sent out on a main ITS channel while using the main ITS channel or a different channel for sharing beacons or other group-specific messages that contain the current station ID and the position about themselves. As a result, a smaller volume of data on the channel is possible.

According to a third aspect of the present invention, in the method according to the first or second aspect of the present invention, the gCAM comprises an ITS header, a group header, which contains at least a group type, and a basic group container, which contains at least positions in relation to the group members. Therefore, it is possible to increase efficiency of transmission by strategic selection according to different group types.

According to a fourth aspect of the present invention, in the method according to the third aspect of the present invention, the gCAM additionally comprises a high frequency group container, which includes the fields from CAM format for the lead member of the group.

According to a fifth aspect of the present invention, in the method according to the third or fourth aspect of the present invention, the group header additionally contains a group ID and a group service announcement information.

According to a sixth aspect of the present invention, in the method according to anyone of the third through fifth aspects of the present invention, the basic group container additionally contains stations IDs and dimensions of each group member. This enables a smaller volume of data on the channel to be transmitted.

According to a seventh aspect of the present invention, in the method according to anyone of the third through sixth aspects of the present invention, the basic group container contains at least one of the positions of the group members, the position of the first group member and then consecutively relative distances of the other group members with respect to the respective previous group member, the position of the first group member and then consecutively relative distances of the other group members with respect to the first group member, the position of the first group member and then the position of the last group member, the position of the first group member and then consecutively relative distances of the other group members with respect to the last group member, the position of the first group member and then the size of the group. This is specifically beneficial, when not all group members are capable of sending CAMs. Due to such a concept of the present invention, the group members can all still be made visible on a direct communication link to the non-group members through gCAM, which are sent by one of the group members.

According to the eighth aspect of the present invention, in the method according to anyone of the first through seventh aspects of the present invention, an ITS-S is determined as a group communicator, based on at least one of the following determination rules: picking an existing group leader, alternating between edge vehicles in relation to the group, like e.g. the front-most and the behind-most vehicle, alternating among all the group members in a round-robin manner, picking a group member who is the most suited from the point of view of coverage of area.

According to the ninth aspect of the present invention, in the method according to anyone of the first through eighth aspects of the present invention, an ITS-S is determined as a group communicator after changing the size of the group.

According to the tenth aspect of the present invention, in the method according to anyone of the first through ninth aspects of the present invention, after the step of sharing gCAMs, the repetition rate is determined, wherein, preferably, for modifying the CAM generation rules the kinematics thresholds from individual ITS-S are adapted to the group or at least one rule is added to consider group configuration changes.

According to the eleventh aspect of the present invention, a computer program is provided which comprises instructions which, when the program is executed by a computer, cause the computer to carry out the steps of anyone of the first through tenth aspects.

According to the twelfth aspect of the present invention, a data processing apparatus comprising means for carrying out the steps of anyone of the first through tenth aspects.

### Brief Description of the Drawings

Hereinafter, the present invention is described more in detail with reference to the drawings and the corresponding detailed description, wherein:
Fig. 1 shows the functions of Collective Perception Service (CPS)
Fig.2 shows the gCAM Message format, and
Figure 3, 4A, 4B, 5A, 5B and 6 show six options for the structure of the basic group container in the Group CAM (gCAM) format according to the present invention as shown in Fig. 2.

### Description of the Embodiment

As mentioned at the outset, V2X is a generic term for road traffic networking, electronic communication of road users with each other in the forms of vehicle-to-vehicle (V2V), vehicle-to-infrastructure (V2I), vehicle-to-network (V2N) and vehicle-to-pedestrian (V2P). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X, for example, safety and road traffic messages, emergency and service data, toll billing and navigation as well as Internet and database content are exchanged. The aims of V2V include notifying drivers of critical and dangerous situations at an early stage, improving the vehicles' awareness of their surroundings, supporting the vehicles' driver assistance systems, and supporting cooperative automated mobility, thereby improving road traffic safety and optimizing road traffic flow.

Two alternative access layer technologies for ITS have been defined by the Institute of Electrical and Electronics Engineers (IEEE) and the Third Generation Partnership Project (3GPP), respectively.

The first approach is often referred to as Dedicated Short-Range Communication (DSRC), which supports vehicular ad-hoc connectivity using Wireless Local Area Network (WLAN) technologies standardized as IEEE 802.11p, which is the basis for the European standard ETSI ITS-G5. The second approach is Cellular-based V2X (C-V2X), a proposal by the 3GPP, based on Long-Term Evolution (LTE), also known as LTE-V2X or sidelink.

In this context, cooperative awareness within road road traffic means that road users and roadside infrastructure are informed about each other's position, dynamics and attributes. Road users are all kind of users on or near the road that play a role in road traffic safety and control, such as cars, trucks, motorcycles, bicycles or even pedestrians and roadside infrastructure equipment including road signs, road traffic lights or barriers and gates. The awareness of each other is the basis for several road safety and road traffic efficiency applications with many use cases as described in ETSI TR 102 638. It is achieved by regular broadcasting of information among the road users, from vehicle to vehicle (V2V), but also from infrastructure to any road user, V2I, I2V or X2X based on wireless networks, called V2X network and as such is part of Intelligent Transport Systems (ITS).

Cooperative safety and road traffic efficiency applications require Intelligent Transportation System (ITS) sub-systems (road users, roadside units, etc.) and their ITS-Stations (ITS-Ss) to develop situational awareness that includes the presence and behavior of road users in their vicinity. Vehicle sub-systems and roadside sub-systems develop their situational awareness from their perception sensors and through communication with other surrounding ITS-Ss. The CA basic service EN 302 637-2, is a European Norm (EN) that specifies how an ITS-S can inform others about its associated sub-systems position, dynamics and attributes by sending Cooperative Awareness Messages (CAMs) according to EN 302 637-2.

The Collective Perception service (CP service or CPS) complements the CA basic service. The CPS specification defines how an ITS-S can inform others about the position, dynamics and attributes of neighboring road users, other objects, and free-space detected by local perception sensors. The CPS enables ITS sub-systems to share information about other road users and obstacles that were detected by local perception sensors such as radars, cameras and the like. In that sense, it aims at increasing awareness between ITS sub-systems by mutually contributing information about their perceived objects to the individual knowledge base of the sub-system.

The Collective Perception Message (CPM) enables sharing of information about detected objects by the disseminating ITS sub-system. The message consists of information about the disseminating ITS sub-system, its sensory capabilities and its detected objects. For this purpose, the message provides generic data elements to describe detected objects in the reference frame of the disseminating ITS sub-system. The CPM is transmitted cyclically with adaptive message generation rates to decrease the resulting channel load while focusing on reporting changes in the dynamic road environment.

In particular, draft ETSI Technical Specification ETSI TS 103 324, currently in the form of V0.0.22 draft (2021-05), focuses on the specifications of CPMs transmitted by ITS-Ss participating in the V2X network and the specification of the CPS with trigger conditions for sending CPMs.

As used herein, an object in the context of the CPS is defined as the state space representation of a physically detected object within a sensor's perception range, an object list is defined as a collection of objects temporally aligned to the same timestamp, the Collective Perception (CP) Service is defined as a facility at the ITS-S facilities layer to generate, receive and process CPMs, the Collective Perception Message (CPM) is defined as a CP service PDU (Protocol Data Unit), Collective Perception Message (CPM) data is defined as a partial or complete CPM payload, the Collective Perception (CPM) protocol is defined as the ITS facilities layer protocol for the operation of the CPM transmission and reception, an ITS station is defined as a functional entity specified by the ITS station (ITS-S) reference architecture, an Object confidence is defined as a quantification of the confidence that a detected object actually exists, i.e., has been detected previously and has continuously been detected by a sensor, a Roadside ITS station is defined as an ITS station in a roadside ITS sub-system, a Sensor Measurement is defined as the operation of a sensor based on its working principle to generate a state space representation for detected objects, a State Space Representation is defined as the mathematical description of a detected object consisting of state variables such as distance, speed, object dimensions, etc., and a Vehicle ITS station is defined as an ITS station in a vehicular ITS sub-system. CPU(s) in an ITS-S carry out the respective layer functions, namely application layer, facilities layer, and network and transport layer.

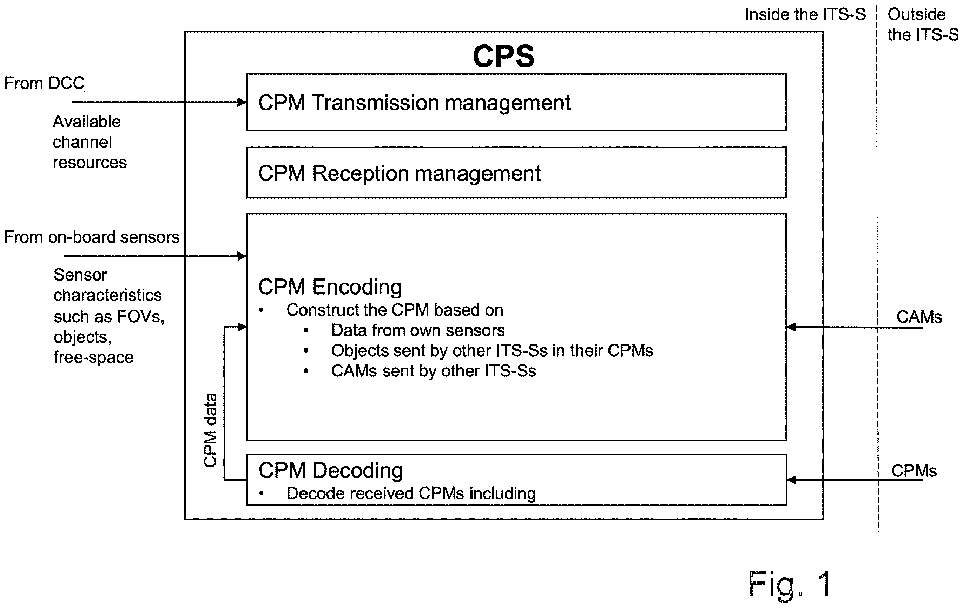

As depicted in Fig. 1, the CPS functions in a respective ITS-S encompass CPM transmission management, CPM reception management, CPM encoding and CPM decoding based on input from the DCC (including e.g. information about available channel resources), from on-board sensors (including e.g. information about sensor characteristics, FOVs, objects, free-space), CAMs and CPMs (from outside the respective ITS-S, e.g. from one or more other ITS-Ss).

In other words, C-ITS comprises stations, like for instance vehicles, that exchange information with each other using direct wireless communication via V2X communication, wherein various messages, such as CAMs (Cooperative Awareness Messages), DENMs (Decentralized Environmental Notification Messages), VAMs (VRU Awareness Messages), are shared. It is also possible to share other messages, such as MCMs (Maneuver Coordination Messages).

This sharing of information is governed, for instance, by the following standards:
- ETSI TS 102 636-4-2 V1.1.1 (2013-10) as an example for traffic class assignment for various ITS messages specifically for ITS G5 technology,
- ETSI EN 302 636-5-1 V2.1.0 (2017-05) according to which the traffic class field in an ITS message is populated by the generating entity (facility / service / application) and the lower layers are informed of the traffic class through interlayer interface,
- ITS messages are generated as per specific rules for generation, wherein those for ex - CAM are defined in ETSI EN 302 637-2 (2014-09) and those for VAM in ETSI TS 103 300-3 V2.1.2 (2021-04).

The consideration of the inventors of the present invention include that in a high traffic density area, the frequent transmission of CAMs from multiple vehicles can quickly exhaust the available channel resources for ITS communication. It might be considered in this context, that a roadside unit (RSU) aggregates CAMs of a single station and/or CAMs of multiple stations before forwarding the corresponding information to the traffic management backend. If no ITS neighbours are in vicinity, an ITS-S sends out only beacons once every 3 seconds. Beacons are small ITS messages that contain only the geo-networking header information - the position and station ID of the ITS-S.

Furthermore, in the considerations of the inventors of the present invention, it has been noticed that vehicle ITS-Ss do their own path planning, which considers the predicted paths of other vehicles about whom the information is received either in the CAMs of those vehicles itself or in the Collective Perception Messages (CPMs) sent by other vehicles that have detected them through their on-board sensors. Vehicle ITS-Ss can perform "group driving" / "group manoeuvres", for example truck platoon, group start at an intersection, and so on, in which multiple vehicles move in a more predictable manner in comparison to their movements as individual vehicles. The members of such a group carry out group-internal communication which can happen on a separate communication channel and can involve group manoeuvre specific messages, e.g. platoon message.

With these considerations in mind, the inventors have found out that, even when there is a kinematical link between multiple vehicle ITS-Ss, e.g. through a group manoeuvre, and each vehicle sends out own CAMs, this leads to a high load and/or rapid congestion of the wireless channels in a busy-traffic area. Moreover, intensive calculations at each other vehicle ITS-S are necessary for path prediction and path planning for the own path of the other vehicles. In the current ETSI standards, only individual CAMs are provided, even for ITS-Ss with a kinematical link between them.

Even when taking the standard TS 103 300-3, ETSI Group VRU Awareness Message (VAM) is sent out for a whole group of VRUs, the group is considered as being one big object which moves in a certain direction and, thus, this standard, can't be applied to vehicles.

As a result of the considerations, the inventors of the present invention have found a new concept, which is called "Group CAM" (gCAM), which means that a CAM is sent out by ITS-S(s) on behalf of a group of ITS-Ss. With this concept, upon the formation of a group or upon any change in the composition of a group, e.g. ITS-S leaving or joining a group, it is possible that the group communicator notes down the static information about the group members, e.g. vehicle dimensions. The other group members may only share beacons or other group-specific messages that contain the current station ID and position about themselves. Moreover, the "group communicator" ITS-S might share gCAM which includes information on the group and each group member, like for instance the station ID, the position, dimensions. The gCAMs are sent out on the "main" ITS channel, e.g. channel 180 in the case of ITS-G5, while the other messages, like beacons and/or group-specific messages, can be on the same channel or can be on a different channel used for the group communication.

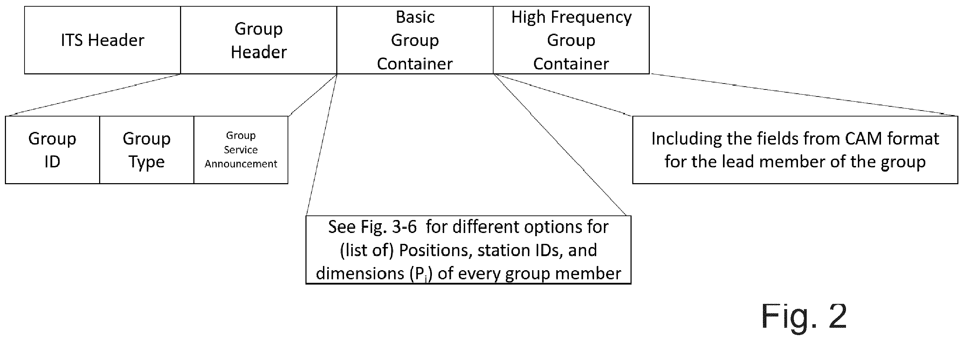

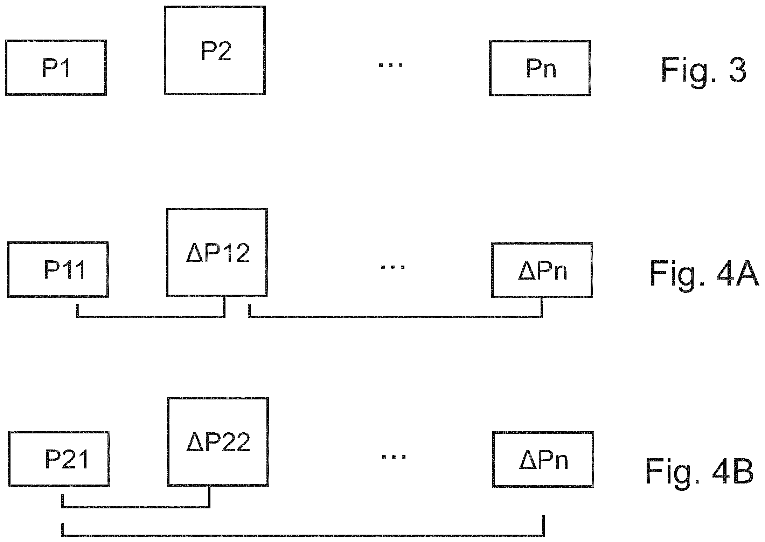

In the following, as shown in Fig. 2, an example of the format of gCAM is illustrated. A gCAM might contain an ITS Header, a Group Header, a Basic Group container and a High Frequency Group container. The Group Header may include a Group ID, a "Group type" parameter and a Group service announcement information. The "Group type" parameter might allow, for instance, the choice between e.g. Single lane platooning, Multiple lane platooning, the formation of a long distance convoy, e.g. group of vehicles travelling to the same destination, and a temporary convoy, e.g. vehicles grouped at an intersection for shorter intersection clearing time upon green light. The Group service announcement information may contain the information of how to join the group. The Basic Group container may contain a list of positions, station IDs and dimensions of every group member. This aspect is illustrated in Fig. 3 through 6 below more in detail. The High Frequency Group container may include the fields from CAM format for the lead member of the group.

In figure 3 through 6 examples are given for the basic group container of Fig. 2 wherein six options are shown which can be summarized under four examples. As already mentioned, the basic group container contains a list of positions, station ID's and dimensions of every group member, which is shown in the figures as follows:

Figure 3 shows the first option in which the positions P1, P2 and Pn, which stands for the nth group member, are defined as absolute positions that means in relation to general coordination system. According to the option shown in figure 4A, the position of the first member 11 is shown in absolute position and then consecutively the relative distances of the other members are defined which means that ΔP12 is a position distance with respect to group member 11 and ΔPn is a relative distance, in the example of Fig. 4A with respect to group member 12.

The option shown in figure 4A may be varied by defining the position of the first member 21 and then the relative distances of each of the consecutive members in relation to the first member 21. This means that the relative distance ΔP22 is a relative distance of the group member 22 and the relative distance ΔPn is a relative distance of the nth group member in relation to group member 21.

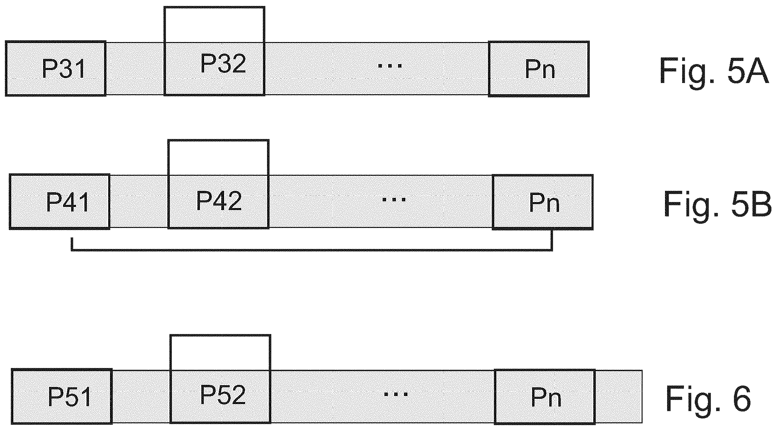

In figure 5A and 5B, a different approach is shown in which the first group member 31 and the last group member Pn are important. More specifically, the option of figure 4A shows the absolute position of the first member 31 and the absolute position of the last member Pn. The option of figure 5B shows the position of the first member 41 and the relative distance of the last member Pn. With the options of figure 5A and 5B the group is rendered as a monolith and cannot be employed from multi-lane type groups or groups which have members of different sizes.

In the option shown in figure 6, the absolute position P51 of the first member 51 is shown and then the size of the group is indicated. This group includes additionally group members 52 till n. Also the option of figure 6 renders the group as a monolith and cannot be employed for multi-lane type groups. The disadvantage of this option is that the group size is exaggerated for accommodating the largest group member.

In the definition of the basic group container with the example of figure 3 through 6 it is assumed that the group communicator is depicted with the large rectangle, that means group member 2 in figure 3, 12 in figure 4A, 22 in figure 4B, 32 in figure 5A, 42 in figure 5B and 52 in figure 6.

With the concept of gCAM according to the present invention, there are several strategies for picking the group communicator within the group. A first possibility is to pick the existing group leader which means, that the led vehicle and the platoon is taken. In the case of the single-lane manoeuvre group type it is possible to alternate between the edge vehicle, for instance between the front-most and the behind-most vehicle in the group. Alternatively, all group members can be used as a group communicator in a round-robin manner. In a further alternative, a group member can be taken wherein this group member is the most suited from the coverage point of view, for instance the front-most group member is taken when there are more remote vehicles in the front, the behind-most group member is taken when more remote vehicles are in the back, while the side-most vehicle is taken if it is necessary to upcoming, to overtake and/or to cross vehicles. This picking up of a group member can be made by the established group leader.

For instance in the case that a group is split into two groups or that the group communicator leaves the group it is necessary to define strategies for reselecting the group communicator. These strategies might include to pick the new leaders of the two groups after the split in the same manner as specified under the strategies for picking the group communicator. It is possible to alternate between two new edge vehicles. The round-robin manner of alternation in the new groups is also possible. Alternatively, it is possible to pick a new group member as group communicator wherein the same criteria as for the initial selection are applied.

With the gCAM concept according to the present invention, it is possible to define strategies for group internal communication and group internal coordination. Examples for this is that group operation specific messages are exchanged which confirm the continuation of a group state or which define the splitting off of group members. There might be two manners for such a communication/coordination which depends on the state on how the group is managed. In the implicit state, the coordination might be triggered by driving in the same direction with a similar speed on a highway wherein vehicles which leave the group might increase or decrease their respective speeds. In the case of explicit communication/coordination, platooning specifications might be used.

The strategies for picking the transmission channel for the GCAMs might be the following: the default strategy might the use of the same channel as for CAMs. If CAMs are complemented, a channel which is different from the other CAMs channel is used.

It has already been specified that CAMs according to the prior art are created and send out periodically with a repetition rate of between 1 and 10 Hertz. With the GCAM concept of the present invention, strategies are possible for determining a repetition rate. It is possible to modify the CAM generation rules to adapt the kinematic threshold from individual ITS-S to the group. This modification might also include to add rules to consider group configuration changes, like for instance that a new group member joins the group.

The benefit which can be obtained by the present invention is defined in the following.

At first, there are benefits in relation to spectral efficiencies. Due to the gCAM concept, a smaller number of CAMs can be used on the main ITS channel. Moreover, a smaller volume of data on the channel is possible since there are less header overhead and random back-off-period for channel access. Moreover, the present invention allows elimination of the need of group announcement messages. Additionally, it is possible to increase efficiency of transmission by strategic selection of the sender based on environmental conditions.

Also the calculation load can be reduced with the present invention. In the vehicle, less calculation is to be executed for the path prediction and/or for the path planning and also in view of the security operation like for instance the signing and the verification of security certificates. Moreover, there is an increased amount of information on free space detection, for instance, if a free space is detected between two members of a group that are performing a platooning manoeuvre the space can be used only for cut-in manoeuvres.

With the present invention there are also benefits when not all group members are capable of sending CAMs. When multiple ITS-Ss are linked in a kinematic manner they might be linked as a group through backend connectivity. Due to the concept of the present invention, they can still be all made visible on a direct communication link to the non-group members through gCAM, which are sent by one of the group members.

## Claims

1. Method for exchanging cooperative awareness information of a group of intelligent transport system stations (ITS-Ss) with the outside of the group, comprising the steps of
upon the formation of a group or upon any change in the composition of a group of ITS-Ss, determining an ITS-S as a group communicator and noting down static information about the other ITS-Ss as group members by the group communicator,
sharing group Cooperative Awareness Messages (gCAM) which includes information on the group and each group member, by the group communicator with the outside of the group.

2. Method according to claim 1, wherein, in the step of sharing gCAM, gCAMs are sent out on a main ITS channel while using the main ITS channel or a different channel for sharing beacons or other group-specific messages that contain the current station ID and the position about themselves.

3. Method according to claim 1 or 2, wherein the gCAM comprises
an ITS header,
a group header, which contains at least a group type, and
a basic group container, which contains at least positions in relation to the group members.

4. Method according to claim 3, wherein the gCAM additionally comprises a high frequency group container, which includes the fields from CAM format for the lead member of the group.

5. Method according to claim 3 or 4, wherein the group header additionally contains a group ID and a group service announcement information.

6. Method according to anyone of claims 3 through 5, wherein the basic group container additionally contains stations IDs and dimensions of each group member.

7. Method according to anyone of claims 3 through 6, wherein the basic group container contains at least one of
- the positions of the group members,
- the position of the first group member and then consecutively relative distances of the other group members with respect to the respective previous group member,
- the position of the first group member and then consecutively relative distances of the other group members with respect to the first group member,
- the position of the first group member and then the position of the last group member,
- the position of the first group member and then consecutively relative distances of the other group members with respect to the last group member,
- the position of the first group member and then the size of the group.

8. Method according to anyone of the preceding claims, wherein an ITS-S is determined as a group communicator, based on at least one of the following determination rules:
- picking an existing group leader,
- alternating between edge vehicles in relation to the group, like e.g. the front-most and the behind-most vehicle,
- alternating among all the group members in a round-robin manner,
- picking a group member who is the most suited from the point of view of coverage of area.

9. Method according to anyone of the preceding claims, wherein an ITS-S is determined as a group communicator after changing the size of the group.

10. Method according to anyone of the preceding claims, wherein after the step of sharing gCAMs, the repetition rate is determined, wherein, preferably, for modifying the CAM generation rules
- the kinematics thresholds from individual ITS-S are adapted to the group or
- at least one rule is added to consider group configuration changes.

11. Computer program comprising instructions which, when the program is executed by a computer, cause the computer to carry out the steps of anyone of method claims 1 through 10.

12. Data processing apparatus comprising means for carrying out the steps of anyone of method claims 1 through 10.
